# EUROPEAN PATENT APPLICATION

(11) **EP 4 672 557 A1**
(43) Date of publication of application: **31.12.2025**
(21) Application number: 25177871.8
(22) Date of filing: 21.05.2025
(51) Int. Cl.: H02K 1/08, H02K 1/24, H02K 1/26, H02K 1/32, H02K 3/24, H02K 9/197, H02K 3/34, H02K 3/52

(54) **ROTOR**

(30) Priority: 27.06.2024 JP 2024103943
(71) Applicant: AISIN CORPORATION, Kariya, Aichi 448-8650 (JP)
(72) Inventor: KITAO, Takuya, Kariya, Aichi 448-8650 (JP)
(74) Representative: TBK

(57) **Abstract**

A rotor includes: an annular rotor core (10) including a plurality of teeth (20) protruding toward a radially outer side and arranged in a circumferential direction, and a slot (30) formed between the teeth in the circumferential direction; a field winding (40) wound around the teeth; an insulating member (70) disposed between a wall surface (30a) of the slot and the field winding to extend along the wall surface of the slot; and a supply portion (2b) including a hole for supplying a coolant between the insulating member and the wall surface of the slot from a radially inner side of the rotor core.

## Description

### TECHNICAL FIELD

This disclosure relates to a rotor.

### BACKGROUND DISCUSSION

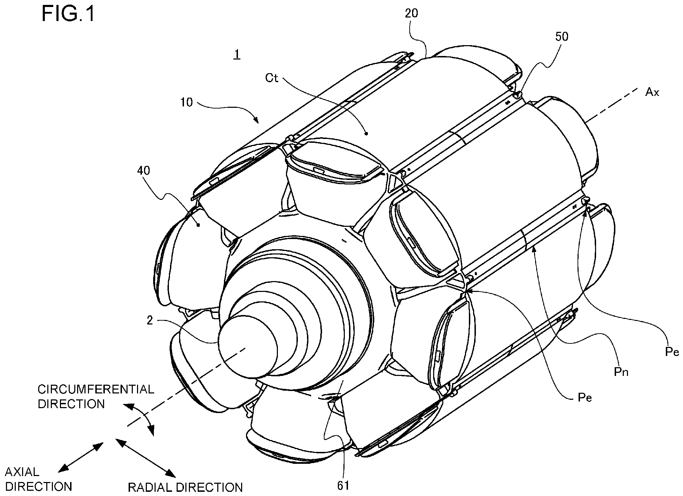

In the related art, a technique of cooling a coil with a coolant in a field winding rotor is known. For example, in German Patent Application Publication No. 102023103931 (Reference 1), a technique is disclosed in which a passage (reference numeral 8 in Fig. 1) for circulating a coolant is formed inside a member (reference numeral 6 in Fig. 1) that fills a gap in a circumferential direction formed between field windings wound around adjacent teeth.

In the related art, it is necessary to provide the passage for circulating the coolant inside the member that fills the gap between the field windings, which tends to complicate a seal structure and increase the number of components. In addition, since the coolant circulates inside the member that fills the gap between the field windings, the coolant and the coil exchange heat via the member, and it is difficult to cool the coil with high efficiency.

A need thus exists for a technique capable of providing a structure for cooling a coil with high efficiency with a simple configuration.

### SUMMARY

In one embodiment, a rotor includes: an annular rotor core including a plurality of teeth protruding toward a radially outer side and arranged in a circumferential direction, and a slot formed between the teeth in the circumferential direction; a field winding wound around the teeth; an insulating member disposed between a wall surface of the slot and the field winding to extend along the wall surface of the slot; and a supply portion including a hole for supplying a coolant between the insulating member and the wall surface of the slot from a radially inner side of the rotor core.

That is, the coolant is supplied between the insulating member and the wall surface of the slot from the radially inner side of the rotor core through the hole. The insulating member is generally thinner than the wedge member that fills a gap between the coils. Therefore, when the coolant is supplied between the insulating member and the wall surface of the slot, the coil can be efficiently cooled by the coolant. Therefore, as compared with a configuration for circulating the coolant inside the wedge member, the coil can be cooled with high efficiency with a simple configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a rotor;
Fig. 2 is a perspective view of the rotor with some members omitted;
Fig. 3A is a cross-sectional view of the rotor, and Fig. 3B is an enlarged sectional view of the rotor;
Figs. 4A and 4B are perspective views showing an end plate;
Fig. 5 is a cross-sectional view showing a state of a rotor core taken along a plane parallel to an axial direction;
Fig. 6 is a cross-sectional view showing a state in which the end plate and a shaft are cut along a line V-V shown in Fig. 5; and
Figs. 7A and 7B are perspective views showing the rotor in a state where the axial direction is oriented in a vertical direction.

### DETAILED DESCRIPTION

Here, an embodiment disclosed here will be described in accordance with the following order.
(1) Configuration of Rotor:
(2) Configuration for Cooling:
(3) Other Embodiments:
   (1) Configuration of Rotor:

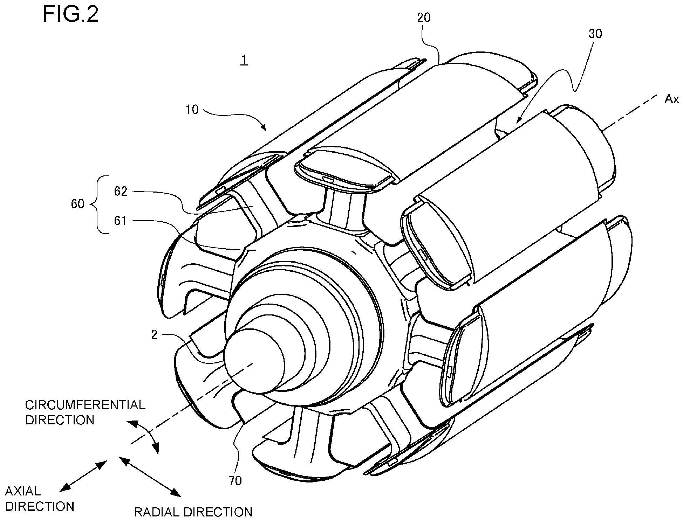

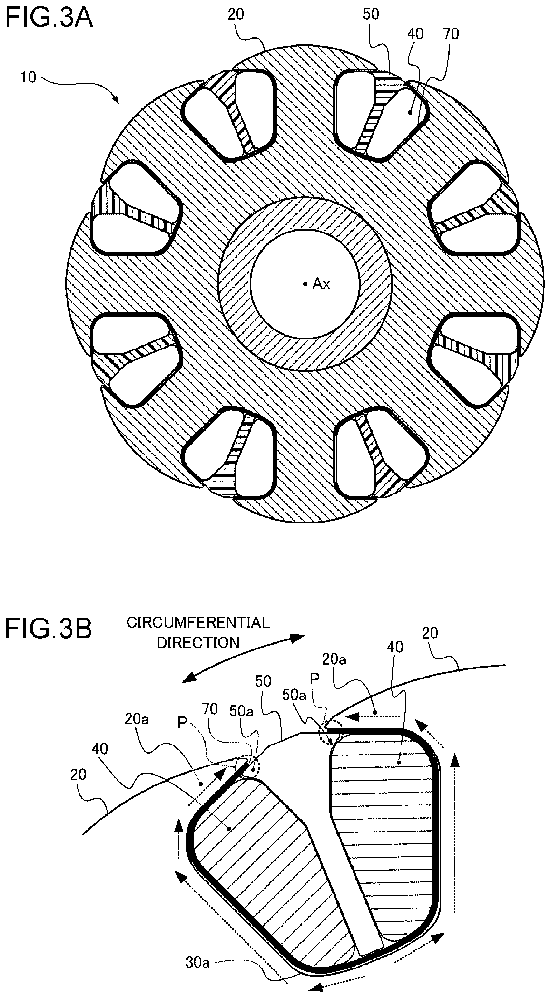

Figs. 1 and 2 are perspective views of a rotor 1 according to the present embodiment, and Fig. 3A is a cross-sectional view showing a state in which the rotor 1 is cut in a direction perpendicular to an axial direction at a cutting position Ct (see Fig. 1) in the axial direction. Fig. 2 is a view in which a field winding 40 and a wedge member 50 are omitted from the rotor 1 shown in Fig. 1. In addition, in the drawings in the present specification, components may be omitted or simplified. For example, in the field winding 40 shown in Figs. 1 and 3A, a shape of each winding is omitted, and a space occupied by a plurality of windings is indicated by a white region.

The rotor 1 according to the present embodiment is a field-winding type of rotor. That is, the rotor 1 is attached to a shaft 2, and rotates about a rotation axis Ax which is a center axis of the shaft 2. In the present specification, a direction parallel to the rotation axis Ax is referred to as the axial direction, a direction perpendicular to the rotation axis Ax is referred to as a radial direction, and a rotation direction about the rotation axis Ax is referred to as a circumferential direction. In the radial direction, a direction separated from the rotation axis Ax is referred to as a radially outer side, and a direction approaching the rotation axis Ax is referred to as a radially inner side.

The rotor 1 includes an annular rotor core 10. The rotor core 10 includes a plurality of teeth 20 protruding toward the radially outer side. The plurality of teeth 20 are equally arranged in the circumferential direction, and there are eight teeth in total in the present embodiment. A slot 30 is formed between the adjacent teeth 20. The slot 30 is a portion that accommodates the field winding 40 wound around the tooth 20. That is, the field winding 40 is wound around each tooth 20 by a predetermined number of turns. A part of the field winding 40 wound around the tooth 20 serves as an accommodation portion accommodated in the slot 30, and the remaining part serves as coil end portions disposed at positions sandwiching the tooth 20 at both ends in the axial direction. In Fig. 1, the coil end portions of the field windings 40 are mainly shown, and the individual windings in the coil end portions are shown as the white regions without distinction.

In the present embodiment, an insulating member 70 is disposed between a wall surface of the slot 30 and the field winding 40. Fig. 3B is a view in which one slot 30 is extracted from the cross section of the rotor core 10 shown in Fig. 3A, hatching of the teeth 20 and the wedge members 50 is omitted, the field winding 40 is hatched, and the insulating member 70 is colored in black. The insulating member 70 is an insulating member for preventing electrical conduction between the field winding 40 and the rotor core 10, and is a thin plate-shaped member made of paper, a resin, or the like. The insulating member 70 is disposed along a wall surface 30a of the slot 30. That is, the insulating member 70 is disposed over the entire surface of the wall surface 30a of the slot 30 so as to be in contact with the wall surface 30a of the slot 30.

In the present embodiment, the insulating member 70 has a rectangular thin plate shape, and is bent such that a largest surface of the rectangle is in contact with the wall surface 30a of the slot 30, thereby having a shape along the wall surface 30a of the slot 30. Specifically, the tooth 20 includes a tooth side protruding portion 20a that protrudes in the circumferential direction on an outermost side in the radial direction. A space between the teeth 20 adjacent to each other in the circumferential direction on the radially inner side of the tooth side protruding portion 20a is the slot 30. The slot 30 is a region in which the field winding 40 is accommodated.

The slots 30 have the same cross-sectional shape in the direction perpendicular to the axial direction over the entire length of the rotor core 10 in the axial direction. That is, a shape of the wall surface 30a of the slot 30 formed between the teeth 20 adjacent to each other in the circumferential direction in a cross section perpendicular to the axial direction is the same at all positions in the axial direction. In the present embodiment, in the cross section in the direction perpendicular to the axial direction, the wall surface 30a of the slot 30 is a wall surface extending in the circumferential direction on an innermost side in the radial direction, a wall surface extending in the radial direction from an inner side to an outer side in the radial direction, and a wall surface extending in the circumferential direction again on the outer side in the radial direction. However, the wall surfaces 30a of the slots 30 are not connected on the radially outer side.

The insulating member 70 is bent to have the same shape as the wall surface 30a so as to be disposed along each position of the wall surface 30a that changes from the inner side to the outer side in the radial direction. As a result, as shown in Fig. 3B, the insulating member 70 is present over the entire surface of the wall surface 30a, and the wall surface 30a and the insulating member 70 are substantially in contact with each other. However, the wall surface 30a and the insulating member 70 are not joined to each other, and as shown in Fig. 3B, a gap may be generated therebetween.

As shown in Fig. 3B, when the field winding 40 is wound around the adjacent teeth 20, a gap is generated between the field windings 40 adjacent to each other in the circumferential direction. In the present embodiment, the wedge member 50 that fills the gap is attached. Since the wedge member 50 fills the gap in the circumferential direction formed between the field windings 40, it is possible to prevent the field windings 40 from deviating and collapsing in a use process of the rotor 1.

The wedge member 50 includes a wedge member side protruding portion 50a that protrudes in the circumferential direction on the outermost side in the radial direction. The wedge member 50 is shaped to fill the gap between the adjacent field windings 40. That is, the wedge member 50 has a shape along an outer shape of the field winding 40 such that no gap is formed (or substantially no gap is formed) between the field winding 40 and the wedge member 50 in the cross section perpendicular to the axial direction as shown in Fig. 3B. Specifically, in the cross section perpendicular to the axial direction, there is a portion where a width of the wedge member 50 in the circumferential direction is constant from the innermost side in the radial direction toward the radially outer side, and the width of the wedge member 50 in the circumferential direction gradually increases from a predetermined position in the radial direction toward the radially outer side. The wedge member side protruding portion 50a protruding in the circumferential direction is formed at a portion on the outermost side in the radial direction.

The wedge member side protruding portion 50a overlaps the tooth side protruding portion 20a in the circumferential direction. That is, distal ends of the wedge member side protruding portions 50a in the circumferential direction are present on the radially inner side of distal ends of the tooth side protruding portions 20a in the circumferential direction, and partially overlap each other in the circumferential direction. In the present embodiment, both ends of the insulating member 70 in the circumferential direction are sandwiched between the wedge member side protruding portion 50a and the tooth side protruding portion 20a. In Fig. 3B, a portion where the insulating member 70 is sandwiched between the wedge member side protruding portion 50a and the tooth side protruding portion 20a is shown as a portion P.

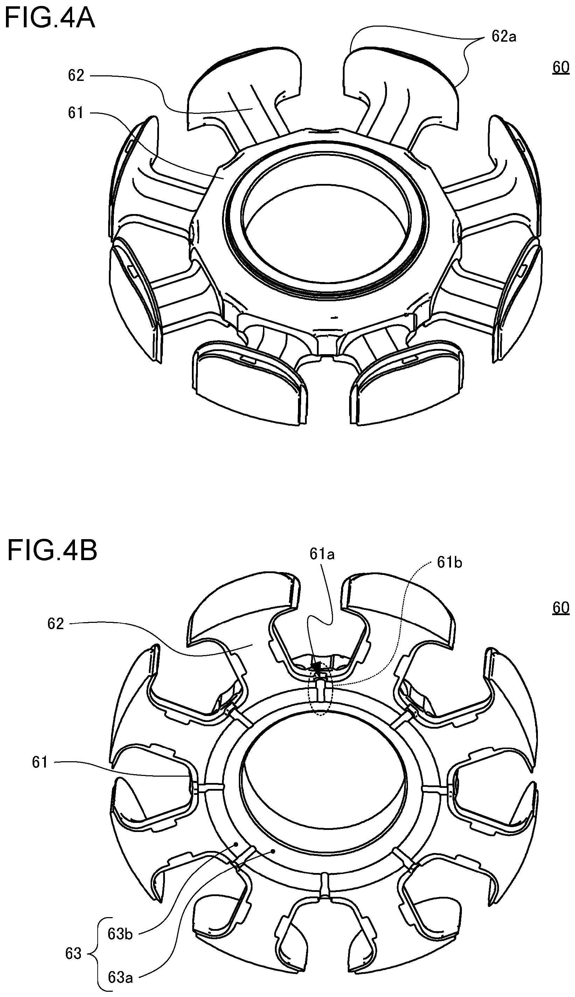

End plates 60 are attached to both ends of the rotor core 10 in the axial direction (see Fig. 2), respectively. Figs. 4A and 4B are perspective views showing the end plate 60. The end plate 60 has a shape in contact with an end surface of the rotor core 10 at each of both ends of the rotor core 10 in the axial direction. Specifically, protruding portions 62 protruding toward the radially outer side from an annular portion 61 are provided. The annular portion 61 forms a ring having substantially the same diameter as an annular portion of the end surface of the rotor core 10 in the axial direction excluding the teeth 20.

The protruding portion 62 is formed toward the radially outer side from the annular portion 61 at a position corresponding to the tooth 20. That is, an end surface of the protruding portion 62 on a rotor core 10 side is in contact with an end surface of the tooth 20 in the axial direction, and shapes of the end surface of the protruding portion 62 and the tooth 20 in the circumferential direction and the radial direction are substantially the same. That is, the protruding portion 62 includes a protruding portion 62a extending toward the radially outer side from the annular portion 61 and protruding in the circumferential direction on the outermost side in the radial direction. The protruding portion 62a has a shape corresponding to the tooth side protruding portion 20a of the tooth 20, and has substantially the same shape (in this example, the protruding portion 62a is slightly smaller) on an end surface where the tooth side protruding portion 20a and the protruding portion 62a are in contact with each other.

As described above, since the end plate 60 includes the annular portion 61 and the protruding portions 62, the end plate 60 covers the end surface of the rotor core 10 in the axial direction. The protruding portion 62 is a portion around which the coil end portion of the field winding 40 is wound. The end plate 60 is made of an insulating material, for example, a resin, and the presence of the end plate 60 between the coil end portion of the field winding 40 and the teeth 20 of the rotor core 10 can prevent the electrical conduction between the field winding 40 and the rotor core 10.

### (2) Configuration for Cooling:

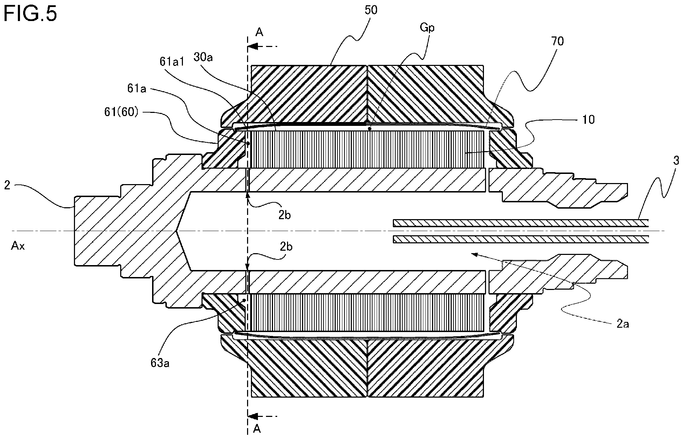

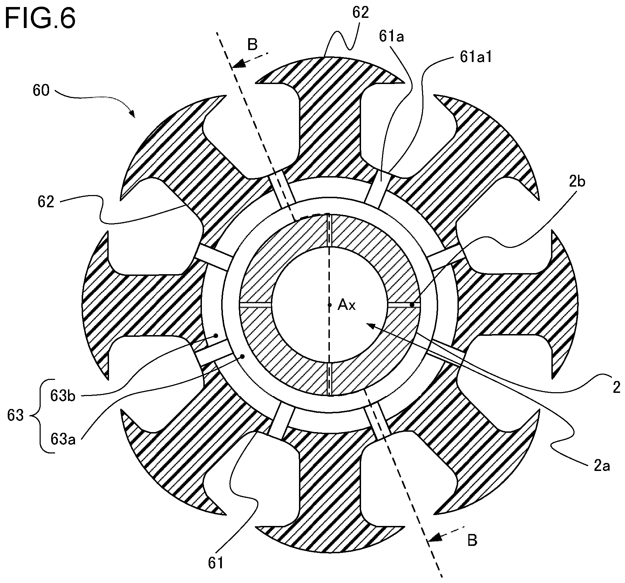

The field winding 40 of the rotor 1 generates heat when a current flows in the use process of the motor. Therefore, the rotor 1 has a configuration for cooling the field winding 40 with a coolant. Fig. 5 is a cross-sectional view showing a state of the rotor core 10 taken along a plane parallel to the axial direction. Fig. 6 is a cross-sectional view showing a state in which the end plate 60 and the shaft 2 are cut along a line V-V shown in Fig. 5, and the end plate 60 is viewed from the rotor core 10 side. In Fig. 6, the field winding 40, the wedge member 50, and the insulating member 70 are omitted. Fig. 5 is a cross-sectional view showing a state obtained by cutting along a line VI-VI shown in Fig. 6. That is, in Fig. 5, a plurality of cross sections at different cutting positions are shown in one figure.

As shown in Figs. 5 and 6, the shaft 2 is attached to the radially inner side of the rotor core 10. The shaft 2 has a cylindrical cavity portion 2a including the rotation axis Ax, and is configured such that the coolant is pressure-fed to the cavity portion 2a through a cylindrical portion 3 inserted into the cavity portion 2a. The shaft 2 is formed with coolant supply portions 2b, which are a plurality of holes extending in a direction parallel to the radial direction. In the present embodiment, four coolant supply portions 2b are formed at positions corresponding to each of both ends of the rotor core 10 in the axial direction. In addition, the coolant supply portions 2b are evenly disposed in the circumferential direction, and an angle between the coolant supply portions 2b adjacent to each other in the circumferential direction in the cross section shown in Fig. 5 is 90 degrees with respect to the rotation axis Ax as a center.

The coolant supply portion 2b is a through hole that penetrates an opening portion that opens to the cavity portion 2a and an opening portion that opens to the radially outer side of the shaft 2. In the present embodiment, a position in the axial direction at which the coolant supply portion 2b is formed is adjusted such that the opening portion of the coolant supply portion 2b on the radially outer side opens to an end surface in the axial direction where the end plate 60 and the rotor core 10 are in contact with each other.

In the present embodiment, grooves 61a are formed in the end plate 60 on the end surface where the end plate 60 and the rotor core 10 are in contact with each other. Specifically, the end surface of the rotor core 10 in the axial direction is formed by a plane perpendicular to the axial direction. An end surface of the end plate 60 in the axial direction also includes the plane perpendicular to the axial direction. When the rotor 1 is manufactured, the end plate 60 is disposed such that a plane constituting the end surface of the rotor core 10 in the axial direction and a plane constituting the end surface of the end plate 60 in the axial direction are in contact with each other.

The groove 61a extending in the direction parallel to the radial direction is formed in the plane constituting the end surface of the end plate 60 in the axial direction. The groove 61a is formed between the protruding portions 62 in the circumferential direction, and opens to a center portion between the protruding portions 62. In the present embodiment, an annular cavity portion 63 is formed on the radially inner side of the groove 61a. That is, a cavity is formed on the radially inner side of the groove 61a over the entire circumference in the circumferential direction (see Figs. 4B and 6). In the present embodiment, the annular cavity portion 63 is a two-stage cavity having different sizes in the axial direction. That is, a first cavity portion 63a having a large size in the axial direction is formed on the radially inner side, and a second cavity portion 63b having a small size in the axial direction is formed adjacent to the first cavity portion 63a on the radially outer side.

The radially inner side of the groove 61a opens to the cavity portion 63. Therefore, the groove 61a is a groove extending in the direction parallel to the radial direction. In the present embodiment, the groove 61a is formed between the adjacent protruding portions 62. That is, eight grooves 61a are formed at end portions of the end plate 60 in the axial direction. In addition, the grooves 61a are evenly disposed in the circumferential direction, and an angle between the grooves 61a adjacent to each other in the circumferential direction in the cross section shown in Fig. 5 is 45 degrees with respect to the rotation axis Ax as the center.

In the present embodiment, the direction in which the groove 61a extends is different from the direction in which the coolant supply portion 2b extends. Specifically, the groove 61a is formed between the protruding portions 62 in the circumferential direction, and the coolant supply portion 2b is configured such that an extension line of the coolant supply portion 2b indicates a center of the protruding portion 62 in the circumferential direction.

In a state where the end plate 60 and the rotor core 10 are in contact with each other, the rotor core 10 side of the groove 61a is closed by the end surface of the rotor core 10. Therefore, an inner wall of the groove 61a and the end surface of the rotor core 10 form a hole penetrating from an opening portion on the radially inner side of the rotor core 10 to an opening portion on the radially outer side of the rotor core 10. That is, a part of an inner wall of the hole is formed by the groove 61a formed in the end plate 60, and the remaining part of the inner wall of the hole is formed by the end surface of the rotor core 10 in the axial direction. With the above configuration, in the present embodiment, a hole is formed in a contact surface between the end plate 60 and the rotor core 10.

In the above configuration, the coolant supply portions 2b are present on the radially inner side of the rotor core 10. Therefore, when the rotor 1 rotates, the coolant accumulated in the cavity portion 2a is supplied to the first cavity portion 63a through the coolant supply portions 2b by a centrifugal force. The groove 61a is not present and the protruding portion 62 is present at an extension destination of the coolant supply portion 2b toward the radially outer side. Therefore, the coolant supplied from the coolant supply portions 2b to the first cavity portion 63a by the centrifugal force does not directly enter the holes formed by the grooves 61a.

The coolant supplied from the coolant supply portion 2b to the first cavity portion 63a accumulates in the first cavity portion 63a and the second cavity portion 63b, but when the rotor 1 rotates, the coolant moves in the circumferential direction in the first cavity portion 63a and the second cavity portion 63b. As a result, the coolant supplied from the coolant supply portions 2b formed at four positions in the cross section shown in Fig. 6 is present in the entire region of the cavity portion 63 in the circumferential direction.

Further, when the centrifugal force acts on the coolant in the cavity portion 63 by the rotation of the rotor 1, the coolant moves toward the radially outer side through the holes formed by the eight grooves 61a. As shown in Figs. 4B and 6, the groove 61a is formed at a center between the protruding portions 62 adjacent to each other in the circumferential direction. Therefore, an opening portion of the hole formed by the groove 61a on the radially outer side opens to the slot 30 of the rotor core 10.

In the present embodiment, the insulating member 70 is disposed along the wall surface 30a of the slot 30 as described above. As shown in Fig. 5, the insulating member 70 is longer than the rotor core 10 in the axial direction, and an end portion of the insulating member 70 in the axial direction is present at a position on an end plate 60 side of the end portion of the rotor core 10 in the axial direction.

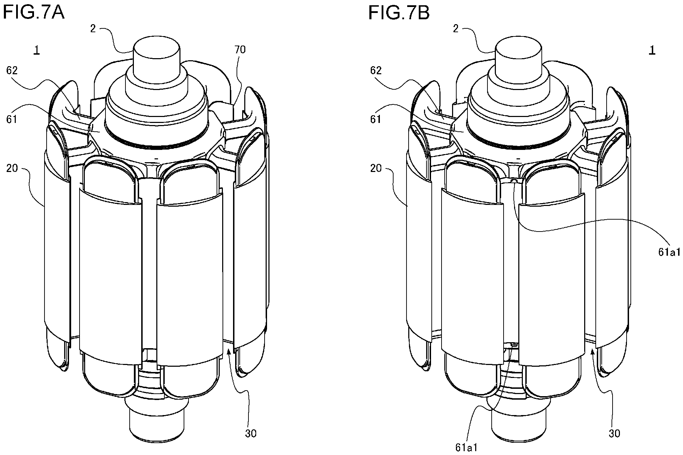

Figs. 7A and 7B are perspective views showing the rotor 1 in a state where the axial direction is oriented in a vertical direction. In Figs. 7A and 7B, the field winding 40 is omitted. Fig. 7A shows a state in which the insulating member 70 is included, and Fig. 7B shows a state in which the insulating member 70 is not included. As shown in Fig. 7A, in the state where the insulating member 70 is present, an opening portion 61a1 of the hole formed by the groove 61a is not exposed. On the other hand, as shown in Fig. 7B, in the state where the insulating member 70 is not present, the opening portion 61a1 is exposed.

Since the insulating member 70 is longer in the axial direction than the position where the opening portion 61a1 is present in the axial direction, the opening portion 61a1 is present on the radially inner side of the insulating member 70 as shown in Fig. 7A in the state where the insulating member 70 is present. Therefore, on the radially outer side, the coolant discharged from the holes formed by the grooves 61a is supplied between the insulating member 70 and the wall surface 30a of the slot 30. In the present embodiment, a portion of the end plate 60 where the groove 61a is formed is referred to as a supply portion 61b (see Fig. 4B).

According to the above configuration, the coolant is supplied between the insulating member 70 and the wall surface 30a of the slot 30 by the rotation of the rotor 1. In the present embodiment, since the insulating member 70 is disposed along the wall surface 30a of the slot 30, the coolant supplied between the insulating member 70 and the wall surface 30a of the slot 30 moves toward the radially outer side between the insulating member 70 and the wall surface 30a of the slot 30 by the centrifugal force accompanying the rotation of the rotor 1. In Fig. 3B, a movement direction of the coolant moving through the gap present between the insulating member 70 and the wall surface 30a of the slot 30 is indicated by dashed arrows near the wall surface 30a.

As described above, the coolant moves between the insulating member 70 and the wall surface 30a of the slot 30, so that the coolant is supplied to the entire gap between the insulating member 70 and the wall surface 30a of the slot 30. Therefore, the coolant can cool a wide range of the field winding 40 via the insulating member 70, and can cool the coil with high efficiency with a simple configuration.

Further, the coolant between the insulating member 70 and the wall surface 30a of the slot 30 can also move in the axial direction. Fig. 5 is a cross-sectional view of the rotor core 10 taken along a plane passing through a center of the wedge member 50 in the circumferential direction and parallel to the axial direction. Therefore, a surface of the rotor core 10 on the radially outer side shown in Fig. 5 is the wall surface 30a of the slot 30. As shown in Fig. 5, a surface of the wedge member 50 on the radially inner side is present outward of the wall surface 30a in the radial direction. Therefore, a gap may be present between the wall surface 30a and the wedge member 50.

In the present embodiment, the insulating member 70 is disposed in the gap. The insulating member 70 has a curved shape in the cross section shown in Fig. 5. Specifically, the end portion of the insulating member 70 in the axial direction is in contact with the end plate 60, and moves away from the end plate 60 and the wall surface 30a toward the center in the axial direction. Therefore, a gap Gp between the wall surface 30a of the slot 30 and the insulating member 70 increases from the end portion in the axial direction toward the center in the axial direction.

In the present embodiment, since the groove 61a is formed in the end surface in the axial direction where the end plate 60 and the rotor core 10 are in contact with each other, the gap Gp at the position of the opening portion 61a1 of the hole formed by the groove 61a is narrower than the gap Gp at the center in the axial direction, and the gap Gp becomes wider toward the center in the axial direction. Therefore, the coolant supplied to the gap Gp through the hole formed by the groove 61a easily flows to the center in the axial direction along the insulating member 70 in the axial direction. With the above configuration, the coolant is supplied to the entire region in the axial direction. Therefore, the coolant can cool a wide range of the field winding 40 via the insulating member 70, and can cool the coil with high efficiency with a simple configuration.

The gap Gp between the insulating member 70 and the wall surface 30a of the slot 30 may be adjusted, so that the coolant supplied from the opening portion 61a1 can easily move to another position in the axial direction. Therefore, it is sufficient that a vicinity of the opening portion 61a1 is narrow and the other positions in the axial direction are wide. Further, the configuration for adjusting the gap Gp is not limited to the adjustment by the shape of the insulating member 70 as shown in Fig. 5, and may be, for example, a configuration in which a protrusion protruding in the radial direction is provided. In the example shown in Fig. 5, a protrusion protruding toward the radially inner side may be provided at the end portion of the wedge member 50 in the axial direction, and the end portion of the insulating member 70 may be sandwiched between the protrusion and the end plate 60. With this configuration, the insulating member 70 can be brought close to the end plate 60 at the end portion in the axial direction, and the insulating member 70 can be separated from the wall surface 30a at the center in the axial direction to relatively increase the gap Gp.

In Fig. 5, a size of the gap Gp in the radial direction is emphasized. Therefore, the size of the gap Gp in the radial direction may be smaller. Of course, the size of the gap Gp in the radial direction may be the length shown in Fig. 5. In this case, a length of the wedge member 50 in the radial direction shown in Fig. 3A is shorter than the shown length.

Further, in the present embodiment, the groove 61a is formed in the end surface of the end plate 60 in the axial direction, and the groove 61a and the plane constituting the end surface of the rotor core 10 form a hole serving as a passage of the coolant. Therefore, the end surface of the rotor core 10 is formed of a plane having a simple shape. Therefore, the coolant can be supplied between the wall surface 30a of the slot 30 and the insulating member 70 with a simple configuration without complicating the shape of the rotor core 10.

Further, in the present embodiment, as shown in Fig. 3B, both ends of the insulating member 70 in the circumferential direction are sandwiched between the wedge member side protruding portion 50a and the tooth side protruding portion 20a at the portion P. Therefore, even when the coolant flows between the wall surface 30a of the slot 30 and the insulating member 70 as indicated by the dashed arrows and reaches the portion P, there is no gap between the wall surface 30a of the slot 30 and the insulating member 70 at the portion P.

Therefore, the coolant is not discharged (or hardly discharged) to the outside of the portion P in the circumferential direction and the radial direction. Therefore, the only room for the coolant that reaches the portion P to move is in the axial direction, and the coolant is discharged to the outside of the rotor 1 from both ends in the axial direction. In Fig. 1, two portions Pe where the coolant can be discharged are shown. The coolant is not discharged (or hardly discharged) from a range sandwiched between the portions Pe at both ends in the axial direction. In Fig. 1, an example of a portion where the coolant is not discharged is shown as a portion Pn.

In the axial direction, since the coolant is not discharged from the range sandwiched between the portions Pe at both ends, it is possible to prevent a drawing resistance between the rotor and a stator from increasing. That is, the length of the stator in the axial direction and the length of the rotor core 10 in the axial direction are substantially the same, and positions of both ends of the stator in the axial direction and positions of both ends of the rotor core 10 in the axial direction substantially coincide with each other. Therefore, for example, when the coolant is discharged from the portion Pn, the coolant is in contact with both the stator located in the vicinity of the portion Pn and the rotor 1, and the drawing resistance is generated when the rotor 1 rotates. The drawing resistance increases as an amount of the coolant present between the stator and the rotor 1 increases.

However, in the present embodiment, since the coolant is not discharged from the portion Pn and the coolant is discharged from the portion Pe, the drawing resistance due to the coolant is not generated or is very small between the stator and the rotor 1. Therefore, according to the rotor 1 of the present embodiment, it is possible to provide a high-torque motor.

### (3) Other Embodiments:

The above embodiment is an example for carrying out the disclosure, and various other embodiments can be adopted. For example, the shapes, the numbers, and the like of the slots 30, the field windings 40, the wedge members 50, the end plates 60, and the insulating members 70 are not limited to those in the above-described embodiment, and various configurations can be adopted. A configuration in which the members described above are integrated, a configuration in which the members are divided into a larger number of members, or the like may be adopted. For example, a configuration in which the end plate 60 and the insulating member 70 are integrated may be adopted.

The rotor core may be an annular member including a plurality of teeth protruding toward the radially outer side and arranged in the circumferential direction and slots formed between the teeth in the circumferential direction. That is, the rotor core may include a plurality of teeth around which the coil is wound, and may be configured such that the rotor core can rotate relative to the stator by an interaction between a magnetic field formed by the coil and a magnetic field formed by the stator. The rotor core may have various configurations such as the number of magnetic poles, the number of slots, and the material. In addition, the rotor core may be rotatable about the rotor shaft disposed on the radially inner side, and a configuration of the rotor shaft such as shape and material is not limited.

The rotor core may be annular as a whole. Shapes of a surface on the radially inner side and a surface on the radially outer side of the ring formed by the rotor core are not limited. For example, the surface on the radially inner side may have a circular shape or a polygonal shape when viewed in the axial direction. The teeth are formed on the surface on the radially outer side, and the slots are formed between the teeth. In the rotor core, a schematic shape including the teeth can be regarded as the annular shape, and a portion excluding the teeth can be regarded as the annular shape.

The field winding may be a square wire or a round wire as long as it is wound around the teeth, and a shape of the wire itself is not limited. The number of windings and a winding manner are also not limited.

The insulating member may be disposed between the wall surface of the slot and the field winding so as to extend along the wall surface of the slot. That is, the insulating member may be interposed between the wall surface of the slot and the field winding over the entire wall surface of the slot to insulate the coil and the rotor core. The insulating member only needs to be able to insulate the coil and the rotor core from each other, and a material and a thickness thereof are not limited, but can be made of various types of paper, a resin, or the like. In addition, the thickness is not limited, but in order to be disposed along the wall surface of the slot, a thickness that can be deformed along the shape of the wall surface is preferable. Such an insulating member is typically thinner than the wedge member.

The supply portion may have a hole for supplying the coolant between the insulating member and the wall surface of the slot from the radially inner side of the rotor core. That is, the supply portion may supply the coolant between the insulating member and the wall surface of the slot through the hole of the supply portion. When the coolant is supplied between the insulating member and the wall surface of the slot, the coil in contact with the insulating member can be cooled by the coolant. Since the insulating member is disposed along the wall surface of the slot, the coolant can be supplied along the wall surface of the slot. Therefore, the entire wall surface of the slot functions as a surface capable of cooling the coil.

The hole is formed to supply the coolant between the insulating member and the slot from the radially inner side of the rotor core. For example, the hole is configured as a through hole connecting a space of the rotor core on the radially inner side and the wall surface of the slot. The hole may be configured such that the coolant flows from the radially inner side toward the radially outer side as the rotor rotates and is supplied between the insulating member and the slot. Examples of such a hole include a hole extending linearly in a direction parallel to the radial direction, but a direction and shape of the hole are not limited as long as the coolant can be supplied between the insulating member and the slot.

The hole may be provided in the supply portion, and the supply portion may be formed by one member or two or more members. The supply portion may be a portion that moves the coolant present on the radially inner side of the rotor core in the radial direction and forms a through hole through which the coolant is supplied between the insulating member and the wall surface of the slot. The hole of the supply portion may be present at any position in the axial direction within a range in which the insulating member is present in the axial direction. Therefore, for example, the end plate 60 may constitute the supply portion, and a hole penetrating the end plate 60 may be formed. Further, the supply portion may be a part of the rotor core 10, and a hole may be formed by the groove formed in the rotor core 10 and the end surface of the end plate 60, or the rotor core 10 may constitute the supply portion and a hole penetrating the rotor core 10 may be formed. Further, a spacer or the like may be disposed between electromagnetic steel plates constituting the rotor core 10, and the spacer and the electromagnetic steel plates may constitute a hole by a hole penetrating the spacer, a groove formed in the spacer, or the like.

The coolant may be supplied between the insulating member and the wall surface of the slot through the hole from the radially inner side of the rotor core, and a method for supplying the coolant to the hole of the rotor core may be various methods. In the above-described embodiment, the passage of the coolant is formed inside the shaft, and the coolant is supplied to the hole of the supply portion via the hole extending from the passage to the surface of the rotor core on the radially inner side, but this disclosure is not limited to such a configuration. For example, the configuration for moving the coolant between the inside of the shaft and the hole of the supply portion is not limited to the hole, and the coolant may be moved by a larger cavity or the like, or various other configurations may be adopted.

## Claims

1. A rotor comprising:
an annular rotor core (10) including a plurality of teeth (20) protruding toward a radially outer side and arranged in a circumferential direction, and a slot (30) formed between the teeth in the circumferential direction;
a field winding (40) wound around the teeth;
an insulating member (70) disposed between a wall surface (30a) of the slot and the field winding to extend along the wall surface of the slot; and
a supply portion (2b) including a hole for supplying a coolant between the insulating member and the wall surface of the slot from a radially inner side of the rotor core.

2. The rotor according to claim 1, further comprising:
an end plate (60) in contact with an end surface of the rotor core at each of both ends in the axial direction, wherein
the supply portion forms the hole on a contact surface between the end plate and the rotor core, and
a gap between the wall surface of the slot and the insulating member increases from an end portion in the axial direction toward a center in the axial direction.

3. The rotor according to claim 2, wherein
the supply portion is a part of the end plate, and
at least a part of the hole is formed by the end plate.

4. The rotor according to claim 1 or 2, further comprising:
a wedge member (50) configured to fill a gap in the circumferential direction formed between the field windings wound around the adjacent teeth, the wedge member including a wedge member side protruding portion protruding in the circumferential direction on the radially outer side, wherein
the teeth each include a tooth side protruding portion protruding in the circumferential direction on the radially outer side, and
both ends of the insulating member in the circumferential direction are sandwiched between the wedge member side protruding portion and the tooth side protruding portion.
